# EUROPEAN PATENT APPLICATION

(11) **EP 4 600 655 A1**
(43) Date of publication of application: **13.08.2025**
(21) Application number: 23874640.8
(22) Date of filing: 19.09.2023
(51) Int. Cl.: G01N 35/00, G01N 21/00

(54) **AUTOMATED ANALYSIS DEVICE**

(30) Priority: 07.10.2022 JP 2022162359
(71) Applicant: HITACHI HIGH-TECH CORPORATION, Tokyo 105-6409 (JP)
(72) Inventor: HORIKAWA Hiroshi, Tokyo 105-6409 (JP); FUKAYA Masashi, Tokyo 105-6409 (JP)
(74) Representative: MERH-IP Matias Erny Reichl Hoffmann Patentanwälte PartG mbB
(86) International application number: PCT/JP2023/033904
(87) International publication number: WO 2024/075511

(57) **Abstract**

The objective of the present invention is to provide an automated analyzing device with which it is easy for a user to understand a current usage status and a replacement time of a limited-life member. To this end, according to the present invention, an automated analyzing device for analyzing an analysis target in a sample comprises a limited-life member used to perform the analysis, a control unit for estimating the remaining service life of the limited-life member, and a display unit capable of using different methods to display the remaining service life, wherein, if the remaining service life of the limited-life member has reached a predefined reference value, the control unit switches the method for displaying the remaining service life that is to be displayed on the display unit.

## Description

### Technical Field

The present invention relates to an automatic analysis device.

### Background Art

In an automatic analysis device that analyzes specimens such as blood, a limited-life member with a certain lifetime is used. For example, light sources are one of the important parts that affects analysis performance. Light emitted from the light source passes through a reaction solution in which a reagent and a specimen are mixed, is dispersed by a spectrometer to a specific number of wavelengths, and is detected by a detector. In recent years, an automatic analysis device provided with a light source using LEDs has been developed instead of halogen lamps used in the related arts. The LED light source generally has a long lighting lifetime, but the lighting lifetime varies depending on a use environment. Therefore, it is important to predict a usable time (remaining lifetime) of the light source and grasp an appropriate replacement time. As a method of predicting the remaining lifetime of the LED, for example, PTL 1 discloses that a remaining lifetime (remaining life) is predicted from a change in a correction rate of an adjustment function to keep a light amount constant (light correction rate).

PTL 1 also discloses that the predicted remaining lifetime is displayed as remaining hours or as the number of remaining days obtained by dividing the remaining hours by an average lighting time per day.

### Citation List

### Patent Literature

PTL 1: JP2018-45951A

### Summary of Invention

### Technical Problem

However, in the technology described in PTL 1, the predicted remaining lifetime is continuously displayed in a single display format from the beginning to the end, and there was a case where it was difficult to grasp a current use status or a case where it was difficult to grasp a specific replacement time. For example, when the remaining hours are consistently displayed from the beginning to the end, it is necessary for a user to calculate when the lifetime will end by themselves. When the number of remaining days is consistently displayed from the beginning to the end, prediction accuracy of the number of remaining days displayed is not high especially at the beginning, and it is difficult to intuitively grasp a current use status.

An object of the present invention is to provide an automatic analysis device that is easy for a user to grasp a current use status and a replacement time of a limited-life member.

### Solution to Problem

To achieve the above object, the present invention provides an automatic analysis device for analyzing an analysis target in a specimen, the device including a limited-life member used to perform analysis, a control unit for predicting a remaining lifetime of the limited-life member, and a display unit capable of displaying the remaining lifetime in different methods, in which, when the remaining lifetime of the limited-life member reaches a predetermined reference value, the control unit switches a display method of the remaining lifetime displayed on the display unit.

Alternatively, to achieve the above object, the present invention provides an automatic analysis device that analyzes an analysis target in a specimen, the device including a limited-life member used to perform analysis, a control unit for predicting a remaining lifetime of the limited-life member, an input unit for selecting a specific candidate from a plurality of candidates as a display method of the remaining lifetime, and a display unit for displaying the remaining lifetime according to a method selected by the input unit.

### Advantageous Effects of Invention

According to the present invention, since the display method is switched according to the remaining lifetime of the limited-life member, it is possible to provide an automatic analysis device that is easy for a user to grasp a current use status and a replacement time of the limited-life member.

### Brief Description of Drawings

[FIG. 1] FIG. 1 is an overall configuration diagram of an automatic analysis device according to the present embodiment.
[FIG. 2] FIG. 2 is a schematic configuration diagram showing an optical system of the automatic analysis device according to the present embodiment and devices disposed around the optical system.
[FIG. 3] FIG. 3 is a diagram showing switching of display of a remaining lifetime on a display unit of the automatic analysis device according to the present embodiment.
[FIG. 4] FIG. 4 is a graph showing a range for displaying the remaining lifetime in a first display method and a range for displaying the remaining lifetime in a second display method.
[FIG. 5] FIG. 5 is a diagram showing a configuration of a notification system including PCs of a plurality of automatic analysis devices and a PC used by a light source replacement worker.
[FIG. 6] FIG. 6 is an example of a screen displayed on the automatic analysis device and the PC of the replacement worker to determine a replacement work date.
[FIG. 7] FIG. 7 is an example of a screen showing a state in which a plurality of candidates are proposed as display methods of remaining lifetime.

### Description of Embodiments

Embodiments of the present invention will be described in detail based on the drawings.

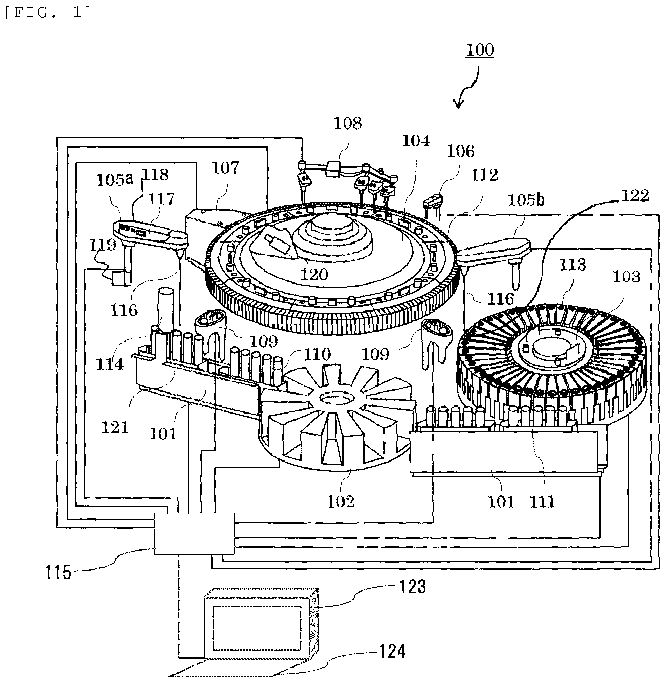

First, using FIG. 1, an overall configuration of an automatic analysis device 100 according to an embodiment of the present invention will be described. FIG. 1 is an overall configuration diagram of an automatic analysis device according to the present embodiment.

As illustrated in FIG. 1, the automatic analysis device 100 is configured by a transport line 101, a rotor 102, a reagent disk 103, a reaction disk 104, a specimen dispensing mechanism 105a, a reagent dispensing mechanism 105b, an agitation mechanism 106, a light source 120, a spectrometer 107, a control unit 115, a display unit 123, an input unit 124, a reaction cell cleaning mechanism 108, a nozzle cleaning mechanism 109, and the like.

The transport line 101 transports a specimen rack 111 that holds a specimen container 110 containing a specimen to a specimen dispensing position 121. The specimen dispensing mechanism 105a dispenses a specimen from the specimen container 110 at the specimen dispensing position 121 to a reaction cell 112 (reaction vessel). The transport line 101 is further connected to the rotor 102. By rotating the rotor 102, the transport line 101 exchanges the specimen rack 111 with another transport line 101.

The reagent disk 103 holds a reagent container 113, and rotationally transfers the reagent container 113 to a reagent dispensing position 122 where the reagent dispensing mechanism 105b performs a dispensing operation. The reagent dispensing mechanism 105b dispenses a reagent from the reagent container 113 at the reagent dispensing position 122 to the reaction cell 112. Note that the reagent dispensed into the reaction cell 112 reacts with a component in the specimen to be analyzed.

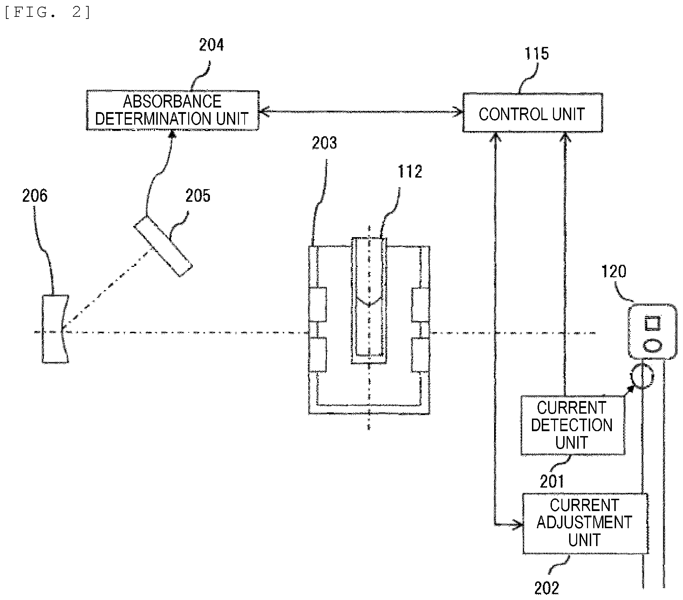

The reaction disk 104 holds the reaction cell 112 and rotationally transfers the reaction cell 112 to each position where the spectrometer 107, the agitation mechanism 106, the reaction cell cleaning mechanism 108, and the like operate. Note that a temperature of the reaction cell 112 is maintained by a thermostatic medium such as water in a reaction tank 203 (see FIG. 2).

Accordingly, in a reaction solution that is a mixture of a specimen and a reagent, a component in the specimen and the reagent chemically react in the reaction solution.

The specimen dispensing mechanism 105a aspirates the specimen to be analyzed from the specimen container 110 and discharges the specimen into the reaction cell 112. The reagent dispensing mechanism 105b aspirates the reagent corresponding to an analysis item from the reagent container 113 and discharges the reagent into the reaction cell 112. Each dispensing mechanism includes an arm 118, a nozzle 116, and a dispensing mechanism motor 119. The arm 118 holds the nozzle 116 and a liquid level sensor 117. The nozzle 116 is connected to the liquid level sensor 117. The liquid level sensor 117 detects presence of a liquid by a change in capacitance. A shield unit 114 is installed near a position where each dispensing mechanism performs the dispensing operation. The dispensing mechanism motor 119 moves each dispensing mechanism vertically or in a rotational direction.

The agitation mechanism 106 agitates the reaction solution in the reaction cell 112 to promote reaction of the analysis target component in the specimen discharged from the specimen container 110 to the reaction cell 112 and the reagent discharged from the reagent container 113 to the reaction cell 112.

The light source 120 irradiates the reaction solution agitated by the agitation mechanism 106 after chemical reaction with output light. The spectrometer 107 disperses the transmitted light passed through the reaction solution. The transmitted and dispersed light is detected by a photodetector 205 (see FIG. 2), and an absorbance determination unit 204 (see FIG. 2) calculates an absorbance based on a detection result, as described later.

The control unit 115 is configured by a processor, a memory, and the like. The control unit 115 controls operations of each mechanism of the automatic analysis device 100 and performs colorimetric analysis based on the absorbance measured in an optical system. The control unit 115 predicts a remaining lifetime of a limited-life member used to perform the analysis (such as the light source 120) from an operating time and a state amount change of the limited-life member. Note that the control unit 115 may be provided on a PC used by a user (operator), or may be provided separately from the PC.

The display unit 123 of the PC is configured by a liquid crystal display (LCD) and the like, and displays an operation screen, a remaining lifetime, and the like. The input unit 124 of the PC is configured by a keyboard, a mouse, a touch panel, and the like, and receives operations from the user.

The reaction cell cleaning mechanism 108 aspirates the reaction solution from the reaction cell 112 of which colorimetric analysis is completed and discharges a detergent or the like, thereby cleaning the reaction cell 112. The nozzle cleaning mechanism 109 cleans a tip of the nozzle 116 of the dispensing mechanism from which the specimen or the reagent was dispensed. Accordingly, residues attached to the nozzle 116 are removed and the next analysis target can be prevented from being affected by the residues.

Next, using FIG. 2, details of the optical system in the automatic analysis device 100 according to the embodiment of the present invention will be described. FIG. 2 is a schematic configuration diagram showing the optical system of the automatic analysis device according to the present embodiment and devices disposed around the optical system.

The light source 120 is configured by one or a plurality of LED elements. Note that when the light source 120 is configured by a plurality of LED elements, the amount of current supplied to each LED element is set separately. The current detection unit 201 monitors (measures) a current flowing to the light source 120. A current adjustment unit 202 includes a circuit that reduces an amount of current supplied to the light source 120 or turns off a power supply of the light source 120, at a timing that does not affect the analysis.

The light from the light source 120 is irradiated to the reaction cell 112 passing through a metering position between the light source 120 and a diffraction grating 206 during the operation of the reaction disk 104. In the reaction solution in the reaction cell 112, the analysis target component in the specimen and the reagent corresponding to the analysis item react to produce or consume a photometric target substance in proportion to a concentration of the analysis target component. Note that there is reaction tank water (thermostatic medium) between the reaction tank 203 and the reaction cell 112.

Light of a wavelength of an absorption region corresponding to the photometric target substance of light irradiated to the reaction solution is absorbed by the photometric target substance. Light transmitted through the reaction solution is incident on the concave diffraction grating 206. The diffraction grating 206 disperses incident light for each wavelength and outputs dispersed light to the photodetector 205. The photodetector 205 converts a light amount into an electrical signal and outputs the electrical signal to the absorbance determination unit 204.

The absorbance determination unit 204 calculates the absorbance based on the electrical signal output from the photodetector 205, and outputs the calculated absorbance to the control unit 115. The control unit 115 performs the colorimetric analysis based on the absorbance output from the absorbance determination unit 204.

In the colorimetric analysis, the control unit 115 dispenses cell blank water to all the reaction cells 112 and measures the absorbance of each wavelength from 340 to 800 nm (cell blank measurement). The control unit 115 stores the measurement result as a cell blank value in a storage unit (not shown). The control unit 115 corrects the absorbance by comparing the cell blank value and the absorbance of the reaction solution to be analyzed, and outputs the corrected absorbance to a screen of the display unit 123 as measurement data.

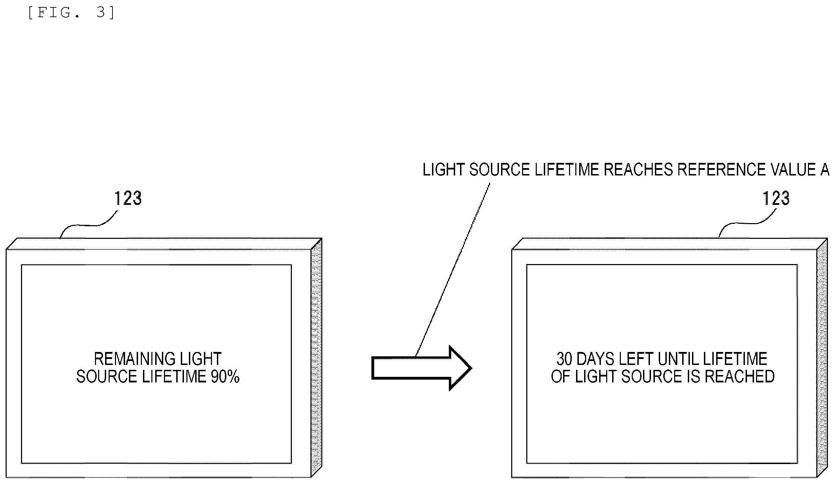

Next, using FIG. 3, a display method of the remaining lifetime of the limited-life member in the automatic analysis device 100 according to the embodiment of the present invention will be described. FIG. 3 is a diagram showing switching of display of the remaining lifetime on the display unit of the automatic analysis device according to the present embodiment. Hereinafter, an LED element that configures the light source 120 as a limited-life member will be described as an example.

The light source 120 configured by an LED element has a longer lighting lifetime than light sources used in biochemical automatic analysis devices of the related arts (such as halogen lamps). However, the lighting lifetime of the light source 120 varies depending on the user's device use environment. For example, the lighting lifetime of the light source 120 is greatly different between a case where the automatic analysis device is operated for only eight hours per day (that is, the light source 120 is turned off for 16 hours per day), and a case where the automatic analysis device is operated continuously for 24 hours. Therefore, in the present embodiment, a uniform replacement time is not provided for the light source 120, and the remaining lifetime is predicted to propose an appropriate replacement time that reflects the device use environment. Note that the remaining lifetime predicted by the control unit 115 is not limited to a time until the lifetime is reached, but may be the number of days until the lifetime is reached or the date and time when the lifetime is reached demanded based on the time and a usage trend of the device.

The date and time when the lifetime of the light source 120 is reached can also be regarded as the replacement time of the light source 120.

For displaying the remaining lifetime predicted by the control unit 115 on the display unit 123, a plurality of display methods are assumed. For example, if the remaining lifetime is still sufficient, for intuitively grasping the current use status of the light source 120, a method of displaying the ratio (%) of the remaining lifetime to an original lifetime of the (new) light source 120 is more suitable than a method of displaying the specific number of days or the like until the lifetime is reached. Meanwhile, if the remaining lifetime is small, it is easier for the user to grasp the replacement time in detail when displaying the specific number of days until the remaining lifetime than displaying the remaining lifetime as a ratio.

Accordingly, the control unit 115 of the present embodiment switches a display method of the remaining lifetime to be displayed on the display unit 123 when the remaining lifetime of the light source 120 reaches a predetermined reference value. In the example of FIG. 3, until the remaining lifetime reaches the reference value A (for example, until a time to reach the lifetime becomes 1,000 hours), the remaining lifetime is displayed as a remaining ratio, and after the remaining lifetime reaches the reference value A, the remaining lifetime is displayed as the number of remaining days. By switching the display method of the remaining lifetime as such, a user can intuitively grasp the use status of the light source 120, and can also set a specific operation plan of the automatic analysis device 100 prepared for replacement of the light source 120. Although the display method before and after switching is not limited to the example in FIG. 3, it is preferable that the display method before switching is low resolution (coarse accuracy) and the display method after switching is high resolution (fine accuracy).

When predicting the remaining lifetime of the light source 120, the control unit 115 uses the lighting time, an attenuation rate of the light amount, the supply current value, and other types of information on the light source 120. Here, when the lighting time of the light source 120 cannot be directly counted, the lighting time can be indirectly obtained from the use time of the automatic analysis device 100. When the automatic analysis device 100 is activated, the light source 120 is basically lighted during standby and operation, so when the use time of the automatic analysis device 100 is multiplied by, for example, a coefficient of 0.90 to 0.99, the lighting time of the light source 120 is obtained indirectly. However, prediction accuracy is higher when the lighting time of the light source 120 is directly counted and the remaining lifetime is predicted using the directly counted time. Therefore, when control is performed to turn off the light source 120 during standby of the automatic analysis device 100, it is desirable to be able to count the lighting time of the light source 120.

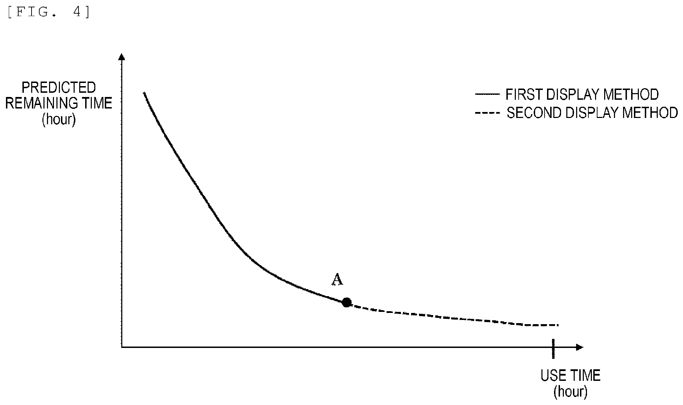

Next, using FIG. 4, a method of determining a reference value for switching the display method of the remaining lifetime will be described. FIG. 4 is a graph showing a range for displaying the remaining lifetime in a first display method and a range for displaying the remaining lifetime in a second display method. In the graph of FIG. 4, a horizontal axis represents the use time of the automatic analysis device 100, and a vertical axis represents the predicted remaining time, respectively. A solid line of the graph indicates a range in which the remaining lifetime is displayed in the first display method (for example, the remaining ratio), and a dashed line of the graph indicates a range in which the remaining lifetime is displayed in the second display method (for example, the number of remaining days). Point A in the graph indicates a timing of switching the display method.

The point A is a predetermined reference value, and may be determined only by the predicted remaining time, may be determined only by the use time, or may be determined using both the predicted remaining time and the use time. The reference value is set considering a certain replacement preparation period so that a replacement work can be completed before the lifetime of the light source 120 is reached. For example, when a replacement worker will place an order for the light source 120 within a predetermined period after reaching the point A, a time of the point A is set so that the light source can be replaced before the lifetime is reached.

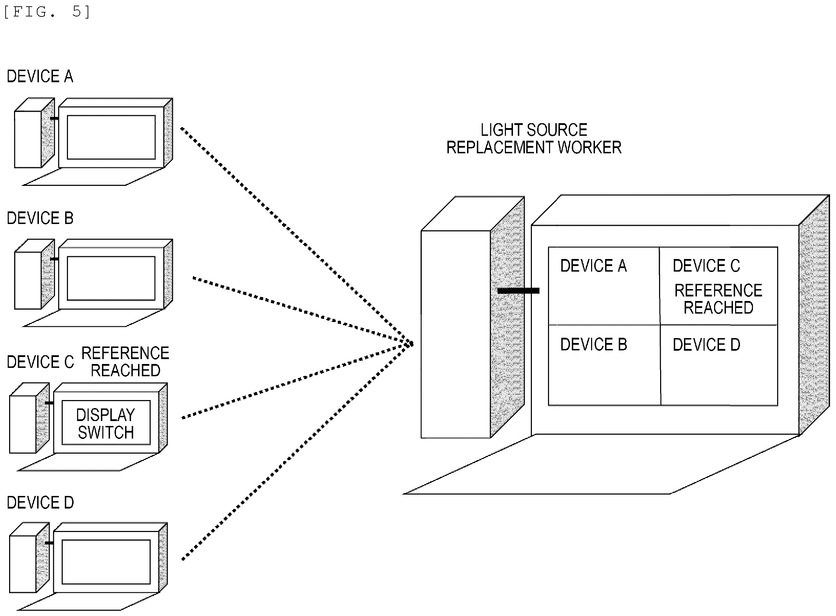

Next, using FIG. 5, a notification to a replacement worker of the light source 120 will be described. FIG. 5 is a diagram showing a configuration of a notification system including PCs of a plurality of automatic analysis devices and a PC used by the replacement worker of the light source. The PC of each automatic analysis device is connected with the PC of the replacement worker via a wired or wireless communication line. Note that the PC used by the replacement worker may be a terminal device such as a smartphone. Here, one worker is assumed to manage the replacement work of the light sources in the automatic analysis devices of A to D installed in separate facilities.

Since the light source replacement time of the automatic analysis devices of A to D managed by one worker is not the same, it is difficult for the worker to grasp replacement times of all devices. Accordingly, in the present embodiment, when the remaining lifetime of the light source 120 reaches the reference value and the display method of the remaining lifetime is switched, the control unit 115 of the automatic analysis device 100 notifies the PC of the replacement worker via the communication line that the reference value is reached. In the example of FIG. 5, since the remaining lifetime of the light source of the automatic analysis device of C reached the reference value, the PC of the replacement worker is notified. Accordingly, the replacement worker can easily grasp the device that needs to be replaced, and a risk of delay in replacement work can be reduced. Note that it is desirable that a notification to the PC of the replacement worker is performed when the reference value is reached, that is, when the display method is switched, but the notification may be performed after a certain period of time from when the reference value is reached.

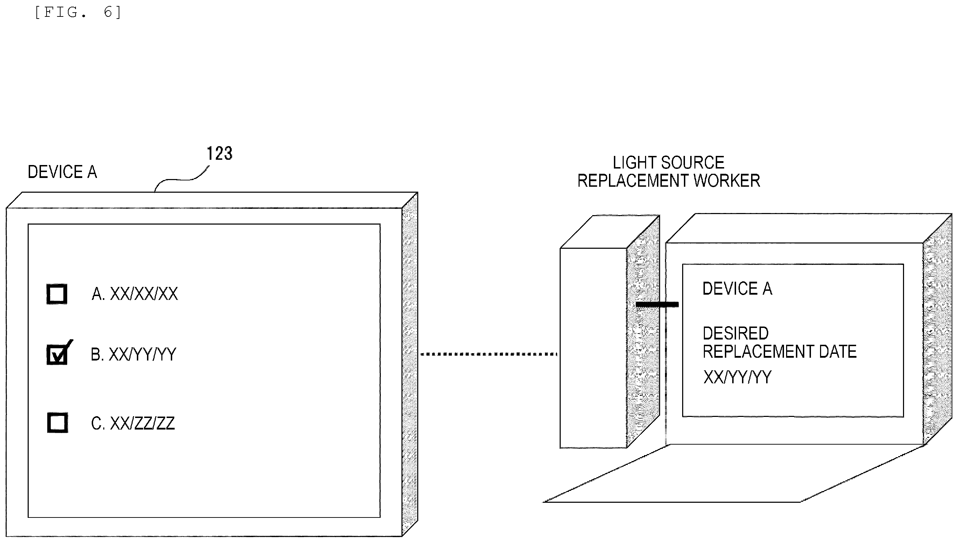

Next, using FIG. 6, a method of determining a replacement work date will be described. FIG. 6 is an example of a screen displayed on the automatic analysis device and the PC of the replacement worker to determine the replacement work date.

In the example of FIG. 6, the remaining lifetime of the light source of the automatic analysis device of A reaches the reference value, and recommended replacement dates of A to C are displayed on the display unit 123. Here, a timing of displaying the recommended replacement dates as in FIG. 6 is not limited to immediately after the remaining lifetime reaches the reference value for switching the display method, but may be after a predetermined time (number of days) after reaching the reference value. Beside the reference value for switching the display method, a reference value for displaying the recommended replacement dates may be provided. A plurality of candidates for the recommended replacement date is calculated by the control unit 115 considering a usage schedule of the automatic analysis device. For example, for an automatic analysis device that is out of use only on Wednesday in a week, Wednesday is calculated as the recommended replacement date.

When a specific recommended replacement date is selected by the input unit 124 from the plurality of recommended replacement dates, the control unit 115 of the automatic analysis device 100 notifies the PC of the replacement worker via the communication line of the selected recommended replacement date. In the example of FIG. 6, since a recommended date of B was selected by the PC of the automatic analysis device of A, the PC of the replacement worker is notified. Accordingly, there are advantages that it is easier for both the user and the replacement worker to adjust the replacement work date and risk of delays in the replacement work is reduced.

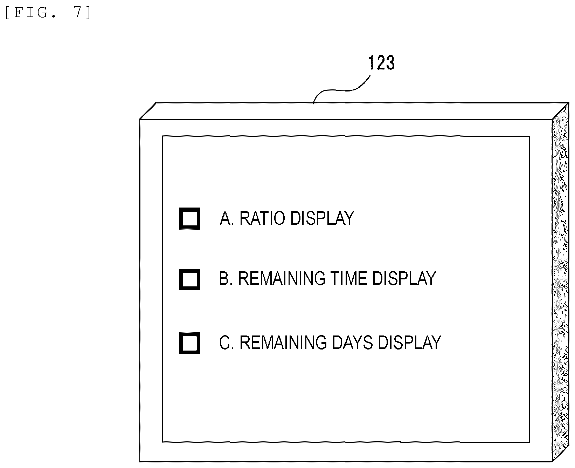

Next, using FIG. 7, a method in which the user switches the display method of the remaining lifetime will be described. FIG. 7 is an example of a screen showing a state in which a plurality of candidates are proposed as a display method of remaining lifetime.

In the example of FIG. 7, three display methods of the remaining ratio, the remaining time, and the remaining days can be selected. When the user selects a specific candidate using the input unit 124, the control unit 115 displays the remaining lifetime on the display unit 123 according to the selected display method. Accordingly, it is easier for the user to grasp the replacement time of the light source 120 as the remaining lifetime can be displayed in the selected method.

The present invention is not limited to the above-described embodiments, and various modifications are included. For example, although the light source 120 is described as an example of a limited-life member in the above embodiment, the embodiment can also be applied to other limited-life members used for analysis. For example, the nozzle 116 of the dispensing mechanism, the syringe (not shown) used for aspirating and discharging a specimen or a reagent, the reaction cell 112, and the like also have a certain lifetime, and thus, when an algorithm for predicting the lifetime can be created, the same can be applied.

### Reference Signs List

100: automatic analysis device
101: transport line
102: rotor
103: reagent disk
104: reaction disk
105a: specimen dispensing mechanism
105b: reagent dispensing mechanism
106: agitation mechanism
107: spectrometer
108: reaction cell cleaning mechanism
109: nozzle cleaning mechanism
110: specimen container
111: specimen rack
112: reaction cell
113: reagent container
114: shield unit
115: control unit
116: nozzle
117: liquid level sensor
118: arm
119: dispensing mechanism motor
120: light source
121: specimen dispensing position
122: reagent dispensing position
123: display unit
124: input unit
203: reaction tank
205: photodetector
206: diffraction lattice

## Claims

1. An automatic analysis device for analyzing an analysis target in a specimen, the automatic analysis device comprising:
a limited-life member used to perform analysis;
a control unit for predicting a remaining lifetime of the limited-life member; and
a display unit capable of displaying the remaining lifetime in different methods, wherein
when the remaining lifetime of the limited-life member reaches a predefined reference value, the control unit switches a display method of the remaining lifetime displayed on the display unit.

2. An automatic analysis device for analyzing an analysis target in a specimen, the automatic analysis device comprising:
a limited-life member used to perform analysis;
a control unit for predicting a remaining lifetime of the limited-life member;
an input unit for selecting a specific candidate from a plurality of candidates as a display method of the remaining lifetime; and
a display unit for displaying the remaining lifetime according to a method selected by the input unit.

3. The automatic analysis device according to claim 1 or 2, wherein the limited-life member is a light source including an LED element.

4. The automatic analysis device according to claim 1, wherein, when the remaining lifetime of the limited-life member reaches a predetermined reference value, the control unit switches the display method of the remaining lifetime from high resolution to low resolution.

5. The automatic analysis device according to claim 1, wherein, when the display method of the remaining lifetime of the limited-life member is switched, the control unit notifies a terminal device connected to the automatic analysis device via a communication line that the reference value is reached.

6. The automatic analysis device according to claim 1 or 2, wherein, the control unit calculates a recommended replacement date of the limited-life member based on the remaining lifetime of the limited-life member and displays the recommended replacement date of the limited-life member on the display unit.

7. The automatic analysis device according to claim 6, further comprising:
an input unit for selecting a specific recommended replacement date from a plurality of the recommended replacement dates, wherein
when the specific recommended replacement date is selected by the input unit, the control unit notifies a terminal device connected to the automatic analysis device via a communication line of the selected recommended replacement date.
